# EUROPÄISCHE PATENTSCHRIFT

(11) **EP 3 857 647 B1**
(45) Veröffentlichungstag und Bekanntmachung des Hinweises auf die Patenterteilung: **15.05.2024**
(21) Anmeldenummer: 19769781.6
(22) Anmeldetag: 16.09.2019
(51) Int. Cl.: H01R 12/70, H01R 12/71, H01R 13/24

(54) **KONTAKTIEREINRICHTUNG ZUM ELEKTRISCHEN KONTAKTIEREN EINER LEITERPLATTE MIT EINEM SPULENKÖRPER FÜR EIN MAGNETVENTIL FÜR EINE BREMSEINRICHTUNG FÜR EIN FAHRZEUG, MAGNETVENTIL MIT EINER KONTAKTIEREINRICHTUNG UND VERFAHREN ZUM HERSTELLEN EINER KONTAKTIEREINRICHTUNG**
CONTACT-MAKING DEVICE FOR MAKING ELECTRICAL CONTACT WITH A PRINTED CIRCUIT BOARD BY A COIL FORMER FOR A SOLENOID VALVE FOR A BRAKE DEVICE FOR A VEHICLE, SOLENOID VALVE COMPRISING A CONTACT-MAKING DEVICE AND METHOD FOR PRODUCING A CONTACT-MAKING DEVICE
DISPOSITIF DE MISE EN CONTACT POUR EFFECTUER LA MISE EN CONTACT ÉLECTRIQUE D'UNE CARTE DE CIRCUIT IMPRIMÉ AVEC UN CORPS DE BOBINE POUR UNE ÉLECTROVANNE POUR UN SYSTÈME DE FREINAGE D'UN VÉHICULE, ÉLECTROVANNE DOTÉE D'UN DISPOSITIF DE MISE EN CONTACT ET PROCÉDÉ DE FABRICATION D'UN DISPOSITIF DE MISE EN CONTACT

(30) Priorität: 28.09.2018 DE 102018123995
(43) Veröffentlichungstag der Anmeldung: 04.08.2021
(73) Patentinhaber: KNORR-BREMSE Systeme für Nutzfahrzeuge GmbH, 80809 München (DE)
(72) Erfinder: RAO, Radhakrishna, 70376 Stuttgart (DE)
(86) Internationale Anmeldenummer: PCT/EP2019/074620
(87) Internationale Veröffentlichungsnummer: WO 2020/064382

(56) Entgegenhaltungen:
- EP-A1- 3 236 724
- DE-A1-102005 023 837
- DE-A1-102012 014 407

## Beschreibung

Der vorliegende Ansatz bezieht sich auf eine Kontaktiereinrichtung zum elektrischen Kontaktieren einer Leiterplatte mit einem Spulenkörper für ein Magnetventil für eine Bremseinrichtung für ein Fahrzeug, ein Magnetventil mit einer Kontaktiereinrichtung und ein Verfahren zum Herstellen einer Kontaktiereinrichtung.

Um eine Magnetspule mit Strom versorgen zu können, werden unterschiedliche Bauteile eingesetzt, um einen elektrischen Kontakt zwischen einer Leiterplatte und einem Spulenkörper oder einer Spule herzustellen.

Die EP 3 109 951 A1 beschreibt eine elektrische Baueinheit mit elektrisch leitenden Kontaktfedern, welche in einem isolierenden Gehäuse aufgenommen sind. Die DE 10 2012 014407 A1 beschreibt eine Vorrichtung zur Erfassung und Verarbeitung von Sensormesswerten und/oder zur Steuerung von Aktuatoren. Die EP 3 236 724 A1 beschreibt eine leistungselektronische Anordnung und Fahrzeuge hiermit. Die DE 10 2005 023 837 A1 beschreibt eine elektronische Regeleinheit mit Kühlung durch Ventilblock.

Vor diesem Hintergrund ist es die Aufgabe des vorliegenden Ansatzes eine verbesserte Kontaktiereinrichtung zum elektrischen Kontaktieren einer Leiterplatte mit einem Spulenkörper für ein Magnetventil für eine Bremseinrichtung für ein Fahrzeug, ein Magnetventil mit einer verbesserten Kontaktiereinrichtung sowie ein Verfahren zum Herstellen einer verbesserten Kontaktiereinrichtung zu schaffen.

Diese Aufgabe wird durch eine Kontaktiereinrichtung zum elektrischen Kontaktieren einer Leiterplatte mit einem Spulenkörper für ein Magnetventil für eine Bremseinrichtung für ein Fahrzeug, ein Magnetventil für eine Bremseinrichtung für ein Fahrzeug sowie ein Verfahren zum Herstellen einer Kontaktiereinrichtung gemäß den Hauptansprüchen gelöst.

Die mit dem vorgestellten Ansatz erreichbaren Vorteile bestehen darin, dass ein federbarer elektrischer Kontakt zwischen einer Leiterplatte und einer Magnetspule herstellbar ist, welcher unter Verwendung von nur sehr wenig Material dennoch sehr stabil gelagert oder geführt ist.

Es wird eine Kontaktiereinrichtung zum elektrischen Kontaktieren einer Leiterplatte mit einem Spulenkörper für ein Magnetventil für eine Bremseinrichtung für ein Fahrzeug vorgestellt. Die Kontaktiereinrichtung weist eine Kontaktfeder und einen Stift auf. Die Kontaktfeder ist spiralförmig und elektrisch leitfähig ausgeformt und an einem ersten Federende mit der Leiterplatte kontaktiert oder kontaktierbar ausgeformt und an einem dem ersten Federende gegenüberliegenden zweiten Federende mit dem Spulenkörper kontaktiert oder kontaktierbar ausgeformt, um ein federbares elektrisches Kontaktieren der Leiterplatte mit dem Spulenkörper zu ermöglichen. Der Stift ist in einem Innenraum der Kontaktfeder aufnehmbar oder aufgenommen, wobei der Stift dazu ausgeformt ist, um in einem in dem Innenraum aufgenommenen Aufnahmezustand die Kontaktfeder aus dem Innenraum heraus zu stützen.

Als der Spulenkörper kann eine Magnetspule oder zumindest eine Komponente der Magnetspule, beispielsweise die Spule oder zumindest ein Spulenabschnitt oder ein Spulengehäuse oder zumindest ein Spulengehäuseabschnitt verstanden werden. Die Kontaktfeder kann zumindest in einem Abschnitt zylindrisch ausgeformt oder gewickelt sein. Der Stift kann ein sogenannter "Pin" sein, der beispielsweise an einem freien Ende verjüngend zulaufend ausgeformt sein kann, beispielsweise, um in den Spulenkörper einsteckbar, einpressbar oder einschraubbar zu sein. Die hier vorgestellte Kontaktiereinrichtung ermöglicht vorteilhafterweise einen stabilen Kontakt zwischen der Leiterplatte und dem Spulenkörper, da die zwischen der Leiterplatte und dem Spulenkörper angeordnete oder anordenbare Kontaktfeder durch den Stift stabilisiert wird. Hierbei kann der Stift dazu ausgeformt sein, um die Kontaktfeder aus dem Innenraum heraus in axialer und/oder lateraler oder radialer Richtung zu stützen. Beispielsweise kann eine Außenfläche des Stifts im Aufnahmezustand die Kontaktfeder kontaktieren.

Es ist von Vorteil, wenn ein erster Federabschnitt der Kontaktfeder einen ersten Radius und ein zweiter Federabschnitt der Kontaktfeder einen zweiten Radius aufweist, wobei der erste Radius und der zweite Radius unterschiedliche Größen aufweisen können.

Der erste Federabschnitt kann ein dem ersten Federende zugewandter und/oder das erste Federende umfassender Abschnitt der Kontaktfeder sein. Der zweite Federabschnitt kann ein dem zweiten Federende zugewandter und/oder das zweite Federende umfassender Abschnitt der Kontaktfeder sein. Beispielsweise kann der erste Radius größer sein, als der zweite Radius. Eine derartige in einem Bereich schmalere Kontaktfeder kann aus Konstruktions- oder Platzgründen von Vorteil sein.

Der Stift formt zumindest eine Stufe aus, insbesondere wobei die Stufe umlaufend an dem Stift ausgeformt sein kann. Ein derartiger Stift kann vorteilhafterweise in dem Innenraum der Kontaktfeder formschlüssig aufgenommen sein oder werden, wenn die Kontaktfeder die oben beschriebenen unterschiedlichen Radien aufweist. Die Stufe kann hierbei im Bereich eines Verbindungsabschnitts zwischen dem ersten Federabschnitt und dem zweiten Federabschnitt angeordnet sein. Beispielsweise kann der Stift angeordnet und/oder ausgeformt sein, um die Kontaktfeder im Bereich der Stufe sowohl axial als auch radial zu kontaktieren und/oder zu stützen.

Der Stift kann in dem Aufnahmezustand dazu ausgeformt und/oder angeordnet sein, um in einem gespannten Zustand der Kontaktfeder zwischen der Leiterplatte und dem Spulenkörper eine Kraft auf den Spulenkörper und/oder auf die Leiterplatte zu übertragen. Hierbei kann die Stufe, beispielsweise in axialer Richtung, auf den zweiten Abschnitt drücken oder gedrückt werden. So kann eine erforderliche Kraft oder erforderliche Kräfte auf die Leiterplatte und/oder den Spulenkörper wirken oder bewirkt werden.

Von Vorteil ist es weiterhin, wenn der Stift ein elektrisch isolierendes Material, insbesondere ein Kunststoffmaterial, aufweist. Beispielsweise kann zumindest die der Kontaktfeder zugewandte Außenfläche des Stifts das Kunststoffmaterial aufweisen. So kann die Kontaktfeder gegenüber einem Gehäuse isoliert sein.

Gemäß einer vorteilhaften Ausführungsform weist die Kontaktiereinrichtung zudem ein in oder an dem Spulenkörper anordenbares oder angeordnetes elektrisch leitfähiges Schweißelement auf, insbesondere wobei das Schweißelement als ein Anschlag für das zweite Federende der Kontaktfeder angeordnet oder anordenbar ist und/oder dazu ausgeformt ist, um ein Stiftende des Stifts einzuführen. Dieses Schweißelement kann eine Schweißhülse sein, die mit einer in den Spulenkörper eingelassenen oder verbundenen elektrischen Leitung verschweißbar oder verschweißt ist. Das Schweißelement kann eine Durchgangsöffnung aufweisen, in die das Stiftende des Stifts axial eingeführt oder einführbar ist.

Die Kontaktiereinrichtung kann auch gemäß einer Ausführungsform den Spulenkörper und/oder die Leiterplatte aufweisen. Der Spulenkörper kann eine Ausnehmung aufweisen, in der das zweite Federende und/oder das Schweißelement und/oder das Stiftende angeordnet oder anordenbar sind. Eine derartige Ausnehmung kann eine stabile formschlüssige Aufnahmemöglichkeit an dem Spulenkörper schaffen. Die Ausnehmung kann einen Hinterschnitt zur sicheren Halterung des Schweißelements ausformen.

Ein Magnetventil weist eine Kontaktiereinrichtung auf, die in einer der vorangehend beschriebenen Varianten ausgeführt ist. Ein derartiges Magnetventil kann zur Verwendung in einer Bremseinrichtung für ein Fahrzeug ausgeformt und/oder ausgebildet sein. Auch ein solches Magnetventil, beispielsweise ein Bremsventil, realisiert vorteilhafterweise dank der Kontaktiereinrichtung deren vorangehend beschriebene Vorteile.

Ein Verfahren zum Herstellen einer Kontaktiereinrichtung zum elektrischen Kontaktieren einer Leiterplatte mit einem Spulenkörper für ein Magnetventil für eine Bremseinrichtung für ein Fahrzeug umfasst einen Schritt des Bereitstellens und einen Schritt des Aufnehmens. Im Schritt des Bereitstellens werden eine spiralförmige elektrisch leitfähige Kontaktfeder, die an einem ersten Federende mit der Leiterplatte kontaktiert oder kontaktierbar ausgeformt und an einem dem ersten Federende gegenüberliegenden zweiten Federende mit dem Spulenkörper kontaktiert oder kontaktierbar ausgeformt ist, um ein federbares elektrisches Kontaktieren der Leiterplatte mit dem Spulenkörper zu ermöglichen, und ein Stift bereitgestellt, der in einem Innenraum der Kontaktfeder aufnehmbar ist, wobei der Stift dazu ausgeformt ist, um in einem in dem Innenraum aufgenommenen Aufnahmezustand die Kontaktfeder aus dem Innenraum heraus zu stützen, wobei der Stift zumindest eine Stufe ausformt. . Im Schritt des Aufnehmens wird der Stift in den Innenraum der Kontaktfeder aufgenommen.

Im Schritt des Aufnehmens kann der Stift in den Innenraum eingeführt oder die Kontaktfeder über den Stift gezogen werden.

Das Verfahren kann zudem einen Schritt des elektrischen Kontaktierens aufweisen, in dem das erste Federende mit der Leiterplatte und/oder das zweite Federende mit dem Spulenkörper elektrisch kontaktiert wird. Der Schritt des elektrischen Kontaktierens kann vor dem Schritt des Aufnehmens und/oder nach dem Schritt des Aufnehmens ausgeführt werden.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes werden in der nachfolgenden Beschreibung mit Bezug zu den Figuren näher erläutert. Es zeigen:
Fig. 1 eine seitliche schematische Querschnittsdarstellung einer Kontaktiereinrichtung zum elektrischen Kontaktieren einer Leiterplatte mit einem Spulenkörper für ein Magnetventil für eine Bremseinrichtung für ein Fahrzeug gemäß einem Ausführungsbeispiel; und
Fig. 2 ein Ablaufdiagramm eines Verfahrens zum Herstellen einer Kontaktiereinrichtung zum elektrischen Kontaktieren einer Leiterplatte mit einem Spulenkörper für ein Magnetventil für eine Bremseinrichtung für ein Fahrzeug gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

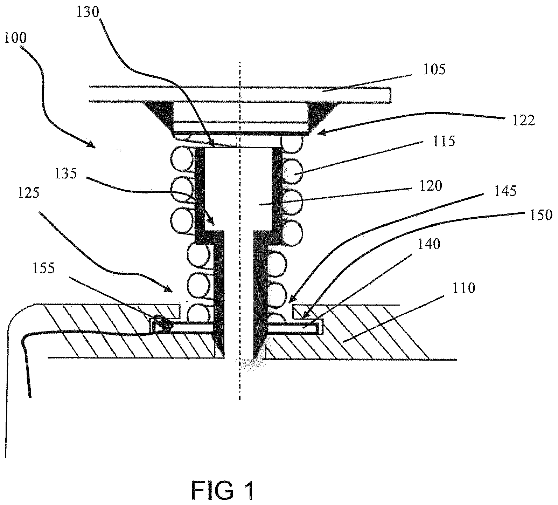

Fig. 1 zeigt eine seitliche schematische Querschnittsdarstellung einer Kontaktiereinrichtung 100 zum elektrischen Kontaktieren einer Leiterplatte 105 mit einem Spulenkörper 110 für ein Magnetventil für eine Bremseinrichtung für ein Fahrzeug gemäß einem Ausführungsbeispiel.

Die Kontaktiereinrichtung 100 kontaktiert die Leiterplatte 105 elektrisch mit dem Spulenkörper 110 und ist zur Verwendung für ein Magnetventil für eine Bremseinrichtung für ein Fahrzeug ausgeformt. Die Kontaktiereinrichtung 100 weist eine Kontaktfeder 115 und einen Stift 120 auf. Die Kontaktfeder 115 ist spiralförmig und elektrisch leitfähig ausgeformt und an einem ersten Federende 122 mit der Leiterplatte 105 kontaktiert oder kontaktierbar ausgeformt und an einem dem ersten Federende 122 gegenüberliegenden zweiten Federende 125 mit dem Spulenkörper 110 kontaktiert oder kontaktierbar ausgeformt, um ein federbares elektrisches Kontaktieren der Leiterplatte 105 mit dem Spulenkörper 110 zu ermöglichen. Der Stift 120 ist in einem Innenraum 130 der Kontaktfeder 115 aufnehmbar oder aufgenommen, wobei der Stift 120 dazu ausgeformt ist, um in einem in dem Innenraum 130 aufgenommenen Aufnahmezustand die Kontaktfeder 115 aus dem Innenraum 130 heraus zu stützen.

Gemäß diesem Ausführungsbeispiel ist der Stift 120 in dem Aufnahmezustand in dem Innenraum 130 der Kontaktfeder 115 aufgenommen und das erste Federende 122 mit der Leiterplatte 105 sowie das zweite Federende 125 mit dem Spulenkörper 110 kontaktiert.

Ein erster Federabschnitt der Kontaktfeder 115 weist gemäß diesem Ausführungsbeispiel einen ersten Radius und ein zweiter Federabschnitt der Kontaktfeder 115 einen zweiten Radius auf, wobei der erste Radius und der zweite Radius unterschiedliche Größen aufweisen. Gemäß diesem Ausführungsbeispiel umfasst der erste Federabschnitt das erste Federende 122 und der zweite Federabschnitt das zweite Federende 125. Der erste Radius ist gemäß diesem Ausführungsbeispiel größer sein, als der zweite Radius.

Der Stift 120 formt gemäß diesem Ausführungsbeispiel eine Stufe 135 aus, welche gemäß diesem Ausführungsbeispiel umlaufend an dem Stift 120 ausgeformt ist. Gemäß diesem Ausführungsbeispiel ist die Stufe 135 im Bereich eines Verbindungsabschnitts der Kontaktfeder 115 zwischen dem ersten Federabschnitt und dem zweiten Federabschnitt angeordnet. Ein im ersten Federabschnitt aufgenommener erster Stiftabschnitt weist gemäß diesem Ausführungsbeispiel einen größeren Radius auf, als ein im zweiten Federabschnitt aufgenommener zweiter Stiftabschnitt.

In einem gespannten Zustand der Kontaktfeder 115 ist der Stift 120 in dem Aufnahmezustand dazu ausgeformt und/oder angeordnet, um zwischen der Leiterplatte 105 und dem Spulenkörper 110 eine Kraft auf den Spulenkörper 110 und/oder auf die Leiterplatte 105 zu übertragen. Der Stift 120 weist gemäß diesem Ausführungsbeispiel ein elektrisch isolierendes Material auf, welches gemäß diesem Ausführungsbeispiel ein Kunststoffmaterial aufweist.

Optional weist die Kontaktiereinrichtung 100 gemäß diesem Ausführungsbeispiel zudem ein in oder an dem Spulenkörper 110 anordenbares oder angeordnetes elektrisch leitfähiges Schweißelement 140 auf. Das Schweißelement 140 ist gemäß diesem Ausführungsbeispiel als ein Anschlag für das zweite Federende 125 der Kontaktfeder 115 angeordnet oder anordenbar und/oder dazu ausgeformt, um ein Stiftende des Stifts 120 einzuführen.

Gemäß diesem Ausführungsbeispiel ist das Schweißelement 140 in einer Ausnehmung 145 des Spulenkörpers 110 aufgenommen. Diese Ausnehmung 145 formt gemäß diesem Ausführungsbeispiel einen Hinterschnitt 150 aus, in dem ein Ende des Schweißelements 140 formschlüssig aufgenommen ist. Eine Schweißelementlängsachse des Schweißelements 140 erstreckt sich in der Ausnehmung 145 gemäß diesem Ausführungsbeispiel quer zu einer Stiftlängsachse des Stifts 120. Der Stift 120 ist gemäß diesem Ausführungsbeispiel quer zu der Schweißelementlängsachse durch eine Durchgangsöffnung in dem Schweißelement 140 durch das Schweißelement 140 hindurchgeführt angeordnet. Das zweite Federende 145 ist bis zu einer Begrenzung durch das Schweißelement 140, welches für das zweite Federende 145 den Anschlag bildet, in die Ausnehmung 145 aufgenommen.

Gemäß diesem Ausführungsbeispiel weist das Schweißelement 140 an zumindest einem Ende eine geschweißte Schweißverbindung 155 mit einem Kupferdraht auf, welcher in dem Spulenkörper 110 aufgenommen oder an dem Spulenkörper 110 angeordnet ist.

Gemäß einem Ausführungsbeispiel sind die Leiterplatte 105 und/oder der Spulenkörper 110 in einer der vorangehend beschriebenen Varianten Teil der Kontaktiereinrichtung 100.

Im Folgenden werden bereits beschriebene Details der Kontaktiereinrichtung 100 noch einmal mit anderen Worten beschrieben:
Die hier vorgestellte Kontaktiereinrichtung 100 realisiert ein elektrisches Kontaktsystem oder Kontaktstützsystem für Magnetventile. Gemäß diesem Ausführungsbeispiel ist die Kontaktiereinrichtung 100 zur Verwendung mit einem Magnetventil für eine Bremseinrichtung eines Lastkraftwagens oder Trucks ausgeformt. Hierbei ermöglicht die Kontaktiereinrichtung 100 vorteilhafterweise ein kostengünstiges Kontaktiersystem, welches die Leiterplatte 105 elektrisch mit einer oder mehreren Magnetspulen des Spulenkörpers 110 verbindet, wenn Strom zugeführt wird. Eine Montage der Kontaktiereinrichtung 100 ist hierbei einfach durchführbar. Zusätzliche Gehäuseelemente oder spezielle Führungs- oder Stützelemente sind dank der Kontaktiereinrichtung 100 an oder im Bereich der Leiterplatte 105 nicht nötig. Aufgrund des Schweißelements 140 ist vorteilhafterweise ein Schweißprozess ermöglicht, welcher gegenüber einem möglichen Lötprozess eine stabilere Verbindung ermöglicht, da die zu verschweißenden Komponenten beim Schweißen durch sehr hohe Temperaturen verflüssigt werden und im Folgenden eine festere stoffschlüssige Verbindung eingehen, als beim Löten. Gegenüber einem möglichen Verlöten der Spule an einem um einen elektrisch leitfähigen Stift gewickelten Wickelbereich ergibt sich durch die hier vorgestellte Kontaktiereinrichtung 100 eine beständigere Verbindung, da die Kontaktfeder 115 zwischen der Leiterplatte 105 und dem Schweißelement 140 gemäß einem Ausführungsbeispiel lediglich flexibel eingespannt ist. Gemäß einem alternativen Ausführungsbeispiel ist das zweite Federende 125 mit dem Schweißelement 140 verschweißt, wodurch eine sehr feste Verbindung gewährleistet wird.

Die federbare Kontaktiereinrichtung 100 ist vorteilhafterweise dazu ausgebildet, um dimensionale Abweichungen wie Maßabweichungen auszugleichen. Dies ist hilfreich, da falls zumindest ein elektrischer Pin zum Einsatz kommt, eine relativ hohe Positionskontrolle oder Lageregelung notwenig ist. Die Stufe 135 und/oder die gestufte Kontaktfeder 115 werden hierbei Konstruktionsanforderungen gerecht und ermöglichen vorteilhafterweise einen reduzierten Platzbedarf. Die Kontaktfeder 115 wird vorteilhafterweise von dem Stift 120 geführt, welcher die Kontaktfeder 115 außerdem von einem Gehäuse isoliert. Der Stift 120 führt und stützt die Kontaktfeder 115 gemäß diesem Ausführungsbeispiel in axialer und lateraler oder radialer Richtung. Dank der Kontaktiereinrichtung 100 ist zudem eine erforderliche Vorspannung zwischen der Leiterplatte 105 und dem Spulenkörper 110 sichergestellt.

Gemäß diesem Ausführungsbeispiel drückt oder spannt die stufenförmige Kontaktfeder 115 gegen die Leiterplatte 105 und das Schweißelement 140, welches an oder in dem Spulenkörper 110 fixiert ist. Das Schweißelement 140 ist gemäß diesem Ausführungsbeispiel als eine Schweißhülse ausgeformt. Der das Kunststoffmaterial aufweisende Stift 120 stützt die Kontaktfeder 115 axial und lateral. Hierbei ist der Stift 120 in Form eines Führungsstifts dazu ausgeformt, um die Kontaktfeder 115 von einer Innenseite zu stützen. Da die Kontaktfeder 115 eine Stufe aufweist, wird der Stift 120 gegen diese Stufe gedrückt, wodurch ausreichende benötigte Kräfte auf das Schweißelement 140 und die Leiterplatte 105 wirken. Durch den in der Kontaktfeder 115 angeordneten Stift 120 ist gegenüber einem möglichen äußeren Führungsgehäuse um die Kontaktfeder 115 herum vorteilhafterweise weniger Baumaterial erforderlich. Ein derartiges äußeres Gehäuse ist nicht nötig. Auch eine Führungsschiene an oder auf der Leiterplatte 115 ist nicht nötig. Zusammengefasst ist die hier vorgestellte Kontaktiereinrichtung 100 einfach und günstig herstellbar sowie einfach montierbar. Hierbei benötigt die Kontaktiereinrichtung 100 vorteilhafterweise nur sehr wenige Bauteile und kann dennoch dimensionale Abweichungen ausgleichen. Für einen Transport sind kein spezieller Aufbau oder keine Hilfsmittel notwendig, da die Kontaktfeder 115 von dem Stift 120 gehalten wird. Vorteilhafterweise ist für die Herstellung der Kontaktiereinrichtung 100 kein Lötprozess notwendig.

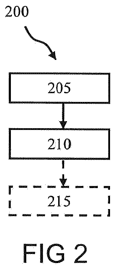

Fig. 2 zeigt ein Ablaufdiagramm eines Verfahrens 200 zum Herstellen einer Kontaktiereinrichtung zum elektrischen Kontaktieren einer Leiterplatte mit einem Spulenkörper für ein Magnetventil für eine Bremseinrichtung für ein Fahrzeug gemäß einem Ausführungsbeispiel. Dabei kann es sich um eine der in Figur 1 beschriebenen Varianten einer Kontaktiereinrichtung handeln.

Das Verfahren 200 umfasst einen Schritt 205 des Bereitstellens und einen Schritt 210 des Aufnehmens. Optional umfasst das Verfahren 200 zudem gemäß diesem Ausführungsbeispiel einen Schritt 215 des elektrischen Kontaktierens.

Im Schritt 205 des Bereitstellens werden eine spiralförmige elektrisch leitfähige Kontaktfeder, die an einem ersten Federende mit der Leiterplatte kontaktiert oder kontaktierbar ausgeformt und an einem dem ersten Federende gegenüberliegenden zweiten Federende mit dem Spulenkörper kontaktiert oder kontaktierbar ausgeformt ist, um ein federbares elektrisches Kontaktieren der Leiterplatte mit dem Spulenkörper zu ermöglichen, und ein Stift bereitgestellt, der in einem Innenraum der Kontaktfeder aufnehmbar ist, wobei der Stift dazu ausgeformt ist, um in einem in dem Innenraum aufgenommenen Aufnahmezustand die Kontaktfeder aus dem Innenraum heraus zu stützen. Im Schritt 210 des Aufnehmens wird der Stift in den Innenraum der Kontaktfeder aufgenommen. Im Schritt 210 des Aufnehmens wird der Stift gemäß diesem Ausführungsbeispiel in den Innenraum eingeführt oder gemäß einem alternativen Ausführungsbeispiel die Kontaktfeder über den Stift gezogen.

Das Verfahren 200 weist zudem den Schritt 215 des elektrischen Kontaktierens auf, in dem das erste Federende mit der Leiterplatte und/oder das zweite Federende mit dem Spulenkörper elektrisch kontaktiert wird. Der Schritt 215 des elektrischen Kontaktierens wird gemäß diesem Ausführungsbeispiel nach dem Schritt 210 des Aufnehmens oder gemäß einem alternativen Ausführungsbeispiel vor dem Schritt 210 des Aufnehmens ausgeführt.

Die hier vorgestellten Verfahrensschritte können wiederholt sowie in einer anderen als in der beschriebenen Reihenfolge ausgeführt werden.

### BEZUGSZEICHENLISTE

- 100: Kontaktiereinrichtung
- 105: Leiterplatte
- 110: Spulenkörper
- 115: Kontaktfeder
- 120: Stift
- 122: erstes Federende
- 125: zweites Federende
- 130: Innenraum
- 135: Stufe
- 140: Schweißelement
- 145: Ausnehmung
- 150: Hinterschnitt
- 155: Schweißverbindung

- 200: Verfahrens zum Herstellen einer Kontaktiereinrichtung
- 205: Schritt des Bereitstellens
- 210: Schritt des Aufnehmens
- 215: Schritt des elektrischen Kontaktierens

## Patentansprüche

1. Kontaktiereinrichtung (100) zum elektrischen Kontaktieren einer Leiterplatte (105) mit einem Spulenkörper (110) für ein Magnetventil für eine Bremseinrichtung für ein Fahrzeug, wobei die Kontaktiereinrichtung (100) zumindest die folgenden Merkmale aufweist:
- eine spiralförmige elektrisch leitfähige Kontaktfeder (115), die an einem ersten Federende (122) mit der Leiterplatte (105) kontaktiert oder kontaktierbar ausgeformt und an einem dem ersten Federende (122) gegenüberliegenden zweiten Federende (125) mit dem Spulenkörper (110) kontaktiert oder kontaktierbar ausgeformt ist, um ein federbares elektrisches Kontaktieren der Leiterplatte (105) mit dem Spulenkörper (110) zu ermöglichen; und
- einen Stift (120), der in einem Innenraum (130) der Kontaktfeder (115) aufnehmbar oder aufgenommen ist, wobei der Stift (120) dazu ausgeformt ist, um in einem in dem Innenraum (130) aufgenommenen Aufnahmezustand die Kontaktfeder (115) aus dem Innenraum (130) heraus zu stützen,
**dadurch gekennzeichnet, dass**
der Stift (120) zumindest eine Stufe (135) ausformt.

2. Kontaktiereinrichtung (100) gemäß Anspruch 1, bei der ein erster Federabschnitt der Kontaktfeder (115) einen ersten Radius und ein zweiter Federabschnitt der Kontaktfeder (115) einen zweiten Radius aufweist, wobei der erste Radius und der zweite Radius unterschiedliche Größen aufweisen.

3. Kontaktiereinrichtung (100) gemäß einem der vorangegangenen Ansprüche, bei der die Stufe (135) umlaufend an dem Stift (120) ausgeformt ist.

4. Kontaktiereinrichtung (100) gemäß einem der vorangegangenen Ansprüche, bei der der Stift (120) in dem Aufnahmezustand dazu ausgeformt und/oder angeordnet ist, um in einem gespannten Zustand der Kontaktfeder (115) zwischen der Leiterplatte (105) und dem Spulenkörper (110) eine Kraft auf den Spulenkörper (110) und/oder auf die Leiterplatte (105) zu übertragen.

5. Kontaktiereinrichtung (100) gemäß einem der vorangegangenen Ansprüche, bei der der Stift (120) ein elektrisch isolierendes Material, insbesondere ein Kunststoffmaterial, aufweist.

6. Kontaktiereinrichtung (100) gemäß einem der vorangegangenen Ansprüche, mit einem in oder an dem Spulenkörper (110) anordenbaren oder angeordneten elektrisch leitfähigen Schweißelement (140), insbesondere wobei das Schweißelement (140) als ein Anschlag für das zweite Federende (125) der Kontaktfeder (115) angeordnet oder anordenbar ist und/oder dazu ausgeformt ist, um ein Stiftende des Stifts (120) einzuführen.

7. Kontaktiereinrichtung (100) gemäß einem der vorangegangenen Ansprüche, mit dem Spulenkörper (110) und/oder der Leiterplatte (105).

8. Kontaktiereinrichtung (100) gemäß einem der vorangegangenen Ansprüche, bei der der Spulenkörper (110) eine Ausnehmung (145) aufweist, in der das zweite Federende (125) und/oder das Schweißelement (140) nach Anspruch 6 und/oder das Stiftende nach Anspruch 6 angeordnet oder anordenbar sind.

9. Magnetventil mit einer Kontaktiereinrichtung (100) gemäß einem der vorangegangenen Ansprüche.

10. Verfahren (200) zum Herstellen einer Kontaktiereinrichtung (100) zum elektrischen Kontaktieren einer Leiterplatte (105) mit einem Spulenkörper (110) für ein Magnetventil für eine Bremseinrichtung für ein Fahrzeug, wobei das Verfahren (200) die folgenden Schritte umfasst:
Bereitstellen (205) einer spiralförmigen elektrisch leitfähigen Kontaktfeder (115), die an einem ersten Federende (122) mit der Leiterplatte (105) kontaktiert oder kontaktierbar ausgeformt und an einem dem ersten Federende (122) gegenüberliegenden zweiten Federende (125) mit dem Spulenkörper (110) kontaktiert oder kontaktierbar ausgeformt ist, um ein federbares elektrisches Kontaktieren der Leiterplatte (105) mit dem Spulenkörper (110) zu ermöglichen und eines Stifts (120), der in einem Innenraum (130) der Kontaktfeder (115) aufnehmbar ist, wobei der Stift (120) zumindest eine Stufe (135) ausformt und dazu ausgeformt ist, um in einem in dem Innenraum (130) aufgenommenen Aufnahmezustand die Kontaktfeder (115) aus dem Innenraum (130) heraus zu stützen; und
Aufnehmen (210) des Stifts (120) in den Innenraum (130) der Kontaktfeder (115).

11. Computerprogramm, das dazu eingerichtet ist, das Verfahren (200) gemäß Anspruch 10 auszuführen.

12. Maschinenlesbares Speichermedium, auf dem das Computerprogramm nach Anspruch 11 gespeichert ist.

## Claims

1. Contacting apparatus (100) for electrically contacting a printed circuit board (105) with a coil body (110) for a solenoid valve for a braking apparatus for a vehicle, wherein the contacting apparatus (100) has at least the following features:
- a helical electrically conductive contact spring (115) which is configured to be contacted or contactable with the printed circuit board (105) at a first spring end (122) and is configured to be contacted or contactable with the coil body (110) at a second spring end (125) opposite the first spring end (122), to enable a resilient electrical contacting of the printed circuit board (105) with the coil body (110); and
- a pin (120) which can be received or is received in an interior space (130) of the contact spring (115), wherein the pin (120) is configured to support the contact spring (115) from the interior space (130) in a received state received in the interior space (130),
**characterized in that**,
the pin (120) forms at least one step (135).

2. Contacting apparatus (100) according to claim 1, wherein a first spring section of the contact spring (115) has a first radius and a second spring section of the contact spring (115) has a second radius, wherein the first radius and the second radius have different sizes.

3. Contacting apparatus (100) according to any one of the preceding claims, wherein the step (135) is formed circumferentially on the pin (120).

4. Contacting apparatus (100) according to any one of the preceding claims, wherein the pin (120) in the received state is configured and/or arranged to transmit a force to the coil body (110) and/or to the printed circuit board (105) in a tensioned state of the contact spring (115) between the printed circuit board (105) and the coil body (110).

5. Contacting apparatus (100) according to any one of the preceding claims, wherein the pin (120) comprises an electrically insulating material, in particular a synthetic material.

6. Contacting apparatus (100) according to any one of the preceding claims, with an electrically conductive welding element (140) which can be arranged or is arranged in or on the coil body (110), in particular wherein the welding element (140) is arranged or can be arranged as a stop for the second spring end (125) of the contact spring (115) and/or is configured to insert an end of the pin (120).

7. Contacting apparatus (100) according to any one of the preceding claims, with the coil body (110) and/or the printed circuit board (105).

8. Contacting apparatus (100) according to any one of the preceding claims, wherein the coil body (110) has a recess (145) in which the second spring end (125) and/or the welding element (140) according to claim 6 and/or the pin end according to claim 6 are/is arranged or can be arranged.

9. Solenoid valve with a contacting apparatus (100) according to any one of the preceding claims.

10. Method (200) for producing a contacting apparatus (100) for electrically contacting a printed circuit board (105) with a coil body (110) for a solenoid valve for a braking apparatus for a vehicle, wherein the method (200) comprises the following steps:
providing (205) a helical electrically conductive contact spring (115), which is configured to be contacted or contactable with the printed circuit board (105) at a first spring end (122) and is configured to be contacted or contactable with the coil body (110) at a second spring end (125) opposite the first spring end (122) to enable a resilient electrical contacting of the printed circuit board (105) with the coil body (110), and a pin (120) which can be received in an interior space (130) of the contact spring (115), wherein the pin (120) forms at least one step (135) and is configured to support the contact spring (115) from the interior space (130) in a received state received in the interior space (130); and
receiving (210) the pin (120) in the interior space (130) of the contact spring (115).

11. Computer program, which is configured to execute the method (200) according to claim 10.

12. Machine-readable storage medium on which the computer program according to claim 11 is stored.

## Revendications

1. Dispositif de mise en contact (100) pour mettre en contact électrique une carte de circuit imprimé (105) avec un corps de bobine (110) pour une électrovanne pour un dispositif de freinage pour un véhicule, dans lequel le dispositif de mise en contact (100) présente au moins les caractéristiques suivantes :
- un ressort de contact électriquement conducteur en forme de spirale (115), qui est formé pour être mis en contact ou pour pouvoir être mis en contact avec la carte de circuit imprimé (105) à une première extrémité de ressort (122) et est formé pour être mis en contact ou pour pouvoir être mis en contact avec le corps de bobine (110) à une seconde extrémité de ressort (125) à l'opposé de la première extrémité de ressort (122) pour permettre une mise en contact électrique élastique de la carte de circuit imprimé (105) avec le corps de bobine (110) ; et
- une broche (120) qui peut être reçue ou est reçue dans un espace intérieur (130) du ressort de contact (115), dans lequel la broche (120) est formée pour supporter le ressort de contact (115) depuis l'espace intérieur (130) dans un état de réception reçu dans l'espace intérieur (130),
**caractérisé en ce que**
la broche (120) forme au moins une marche (135).

2. Dispositif de mise en contact (100) selon la revendication 1, dans lequel une première section de ressort du ressort de contact (115) présente un premier rayon et une seconde section de ressort du ressort de contact (115) présente un second rayon, dans lequel le premier rayon et le second rayon présentent des tailles différentes.

3. Dispositif de mise en contact (100) selon l'une quelconque des revendications précédentes, dans lequel la marche (135) est formée circonférentiellement sur la broche (120).

4. Dispositif de mise en contact (100) selon l'une quelconque des revendications précédentes, dans lequel, dans l'état de réception, la broche (120) est formée et/ou disposée pour transmettre une force au corps de bobine (110) et/ou à la carte de circuit imprimé (105) dans un état tendu du ressort de contact (115) entre la carte de circuit imprimé (105) et le corps de bobine (110).

5. Dispositif de contact (100) selon l'une quelconque des revendications précédentes, dans lequel la broche (120) présente un matériau électriquement isolant, en particulier un matériau plastique.

6. Dispositif de mise en contact (100) selon l'une quelconque des revendications précédentes, avec un élément de soudage (140) électriquement conducteur pouvant être disposé ou disposé dans ou au niveau du corps de bobine (110), en particulier dans lequel l'élément de soudage (140) est disposé ou peut être disposé en tant que butée pour la seconde extrémité de ressort (125) du ressort de contact (115) et/ou est formé pour insérer une extrémité de broche de la broche (120).

7. Dispositif de mise en contact (100) selon l'une quelconque des revendications précédentes, avec le corps de bobine (110) et/ou la carte de circuit imprimé (105).

8. Dispositif de mise en contact (100) selon l'une quelconque des revendications précédentes, dans lequel le corps de bobine (110) présente un évidement (145) dans lequel la seconde extrémité de ressort (125) et/ou l'élément de soudage (140) selon la revendication 6 et/ou l'extrémité de broche selon la revendication 6 sont disposés ou peuvent être disposés.

9. Électrovanne avec dispositif de mise en contact (100) selon l'une quelconque des revendications précédentes.

10. Procédé (200) de fabrication d'un dispositif de mise en contact (100) pour mettre en contact électrique une carte de circuit imprimé (105) avec un corps de bobine (110) pour une électrovanne pour un dispositif de freinage pour un véhicule, dans lequel le procédé (200) comprend les étapes suivantes :
fourniture (205) d'un ressort de contact électriquement conducteur en forme de spirale (115) qui est mis en contact ou est formé pour pouvoir être mis en contact avec la carte de circuit imprimé (105) à une première extrémité de ressort (122) et qui est en mis contact ou formé de manière à pouvoir être mis en contact avec le corps de bobine (110) à une seconde extrémité de ressort (125) opposée à la première extrémité de ressort (122), pour permettre une mise en contact électrique élastique de la carte de circuit imprimé (105) avec le corps de bobine (110) et d'une broche (120) qui peut être reçue dans un espace intérieur (130) du ressort de contact (115), dans lequel la broche (120) forme au moins une marche (135) et est formée pour supporter le ressort de contact (115) depuis l'espace intérieur (130) dans un état de réception reçu dans l'espace intérieur (130) ; et
réception (210) de la broche (120) dans l'espace intérieur (130) du ressort de contact (115).

11. Programme informatique qui est configuré pour mettre en oeuvre le procédé (200) selon la revendication 10.

12. Support de stockage lisible par machine, sur lequel le programme informatique selon la revendication 11 est stocké.
